# EUROPEAN PATENT SPECIFICATION

(11) **EP 2 583 031 B1**
(45) Date of publication and mention of the grant of the patent: **17.12.2014**
(21) Application number: 11728486.9
(22) Date of filing: 17.06.2011
(51) Int. Cl.: F16L 57/00, F22B 37/10

(54) **AERODYNAMIC TUBE SHIELDS**
AERODYNAMISCHER RÖHRENSCHUTZ
PROTECTIONS AÉRODYNAMIQUES DE TUBES

(30) Priority: 17.06.2010 US 355783 P
(43) Date of publication of application: 24.04.2013
(73) Proprietor: Covanta Energy Corporation, Morristown, NJ 07960 (US)
(72) Inventor: EPELBAUM, Grigory, Morristown, NJ 07960 (US)
(74) Representative: Müller Schupfner & Partner Patent- und Rechtsanwaltspartnerschaft mbB
(86) International application number: PCT/US2011/040890
(87) International publication number: WO 2011/160025

(56) References cited:
- FR-A- 1 004 838
- US-A- 1 493 245
- US-A1- 2010 038 061

## Description

### Field of the Invention

The present invention relates to tube shields and baffles generally. More specifically, the present invention relates to aerodynamic tube shields.

### Background of the Invention

In many applications and environments, such as boilers (including evaporators therein), gas has a tendency towards certain areas. This unequal gas flow distribution can reduce heat transfer efficiency among tubes in these applications and environments, and further results in such tubes being fouled and worn more quickly.

Baffles may be used to redirect gas flow, but have many drawbacks and, correspondingly, are frequently not used in many applications and environments (including boilers). Baffles are typically solid, flat plates that run from one area in an application or environment to another. For example, in the context of a boiler, a baffle might run from a rear wall to the center of a pass. This eliminates portions of the tubes in the boiler from heat transfer and a substantial part of the gas net flow area, as well as increases gas velocity in other tube areas, resulting in the degradation of the tubes. Tube shields are known in the art to be useful to a protect a tube against the hostile environment in which the tube resides, but are not known to assist in gas flow distribution.

US 1,493,245 A discloses a protector for steam boiler tubes. The protector comprises a metallic tubular shield, which preferably comprises a plurality of separable sections. Along the longitudinal edges of each section lateral ribs, which are integral with the sections, are arranged. Each pair of ribs forms a dove tail.

FR 1 004 838 A discloses an evaporator having a plurality of vertical tubes, wherein each tube is surrounded by a metal sleeve having a plurality of longitudinally extending fins. The fins are arranged such that uninterrupted channels are formed around the tube for longitudinally guiding a gas flow along the tube.

In view of the foregoing and for other reasons, there is a need in the art for an aerodynamic tube shield that can more efficiently and effectively redirect gas flow in an application or environment, while simultaneously providing a shield to protect the tube from its hostile application or environment.

### Summary of the Invention

Novel aerodynamic tube shields are presented herein. One embodiment is comprised of a body, such as e.g. a semi-cylindrical body, for protecting against a tube's hostile environment and first and second fins, which are tapered, for redirecting the flow of gas in the area around the tube.

More generally, the invention is defined by the technical features or method steps set forth in independent product claims 1 and 8 or in independent method claim 12, respectively. Additional technical features or method steps of the invention are disclosed in the dependent claims.

### Brief Description of the Figures

Fig. 1 is an embodiment of an aerodynamic tube shield of the present invention.
Fig. 2 is a second view of an embodiment of an aerodynamic tube shield of the present invention.
Fig. 3 depicts an embodiment of an aerodynamic tube shield of the present invention mounted on a tube.
Figs. 4a through 4c depict various views of an evaporator in a third pass of an energy-from-waste (EfW) boiler.
Fig. 5 shows computational fluid dynamics (CFD) modeling mesh details for an embodiment of aerodynamic tube shields installed along the rear wall at the outlet of an evaporator.
Figs. 6a through 6c are CFD simulation results of an evaporator where no aerodynamic tube shields of the present invention are used.
Figs. 7a through 7c are CFD simulation results of an evaporator where an embodiment of aerodynamic tube shields of the present invention are installed on tubes at the inlet and outlet of the evaporator.
Figs. 8a through 8c are CFD simulation results of an evaporator where another embodiment of aerodynamic tube shields of the present invention are installed on tubes at the inlet and outlet of the evaporator.
Figs. 9a and 9b are graphs relating to data collected regarding heat recovery in an evaporator in an EfW boiler before and after the use of aerodynamic tube shields of the present invention.

### Detailed Description

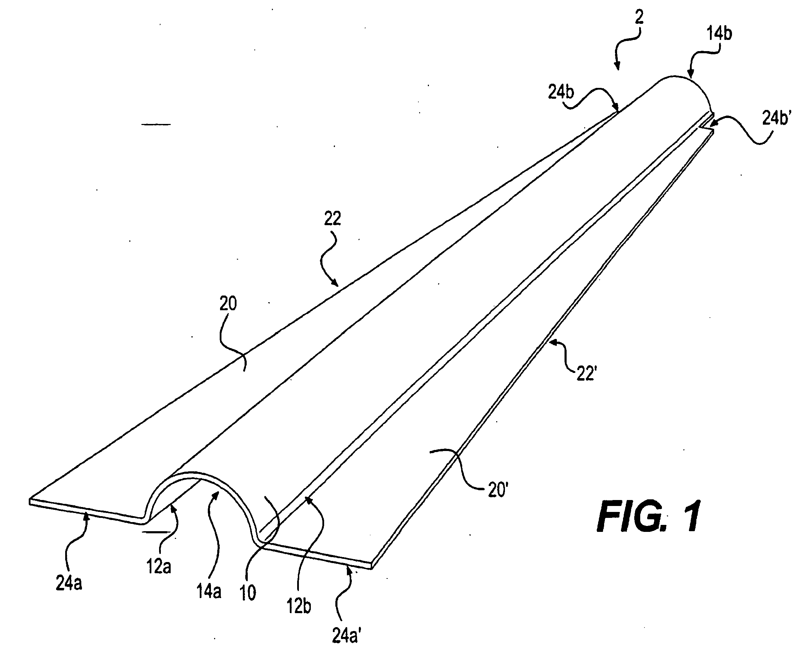

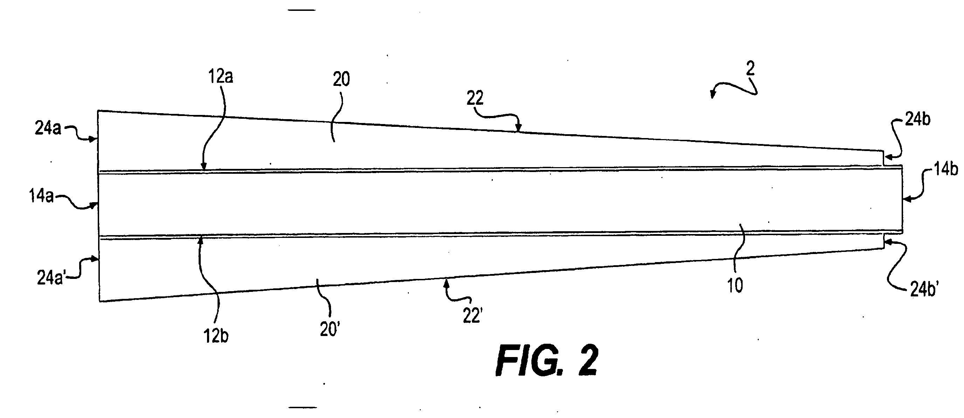

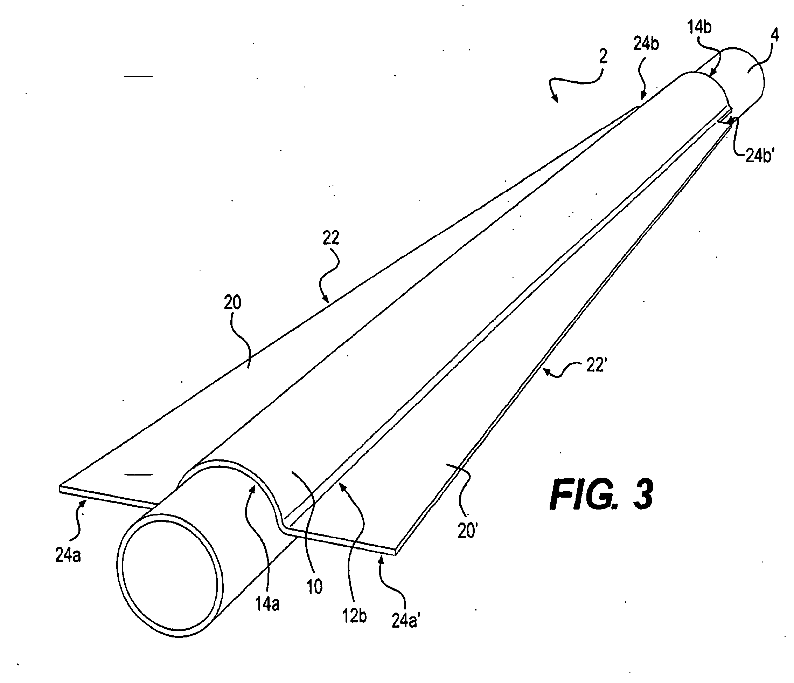

The invention disclosed herein can be conceptualized as an aerodynamic tube shield that can be used in a variety of applications to help maximize heat transfer efficiency and alleviate the effects of unequal gas flow distribution, while simultaneously providing a shield to protect a tube against an application's environment. Figs. 1 and 2 illustrate embodiments of such aerodynamic tube shield 2, and Fig. 3 illustrates an embodiment of such aerodynamic tube shield 2 mounted on a tube 4. In embodiments according to the invention, the aerodynamic tube shield 2 is comprised of a body 10, such as e.g a semi-cylindrical body, and first and second fins 20, 20'. The body 10 may surround or rest on the surface of a tube 4 or a portion thereof, so as to protect said tube 4 or said portion thereof. In some embodiments, said body 10 may protect said tube 4 or said portion thereof from abrasion and corrosion, which can result from, among other things, the exposure of the tube 4 to hot gases, fly ash, and other hostile elements in its environment (such as the boiler environment). The body 10 may have a radius substantially the same as the outer radius of the tube 4 on which it surrounds or rests. Thus, in some embodiments, the radius of the body 10 may vary depending on the outer radius of the tube 4. The length of the body 10 may similarly vary, depending on, among other things, the portion of the tube 4 that the aerodynamic tube shield 2 is designed to protect and the desired length of the first and second fins 20, 20'. The body 10 may be made of any type of material that can be used to protect the tube 4 from the effects of the tube's 4 environment, including metals and ceramic materials. In certain embodiments, the body 10 may be comprised of a steel, such as carbon steel.

The body 10 has a first edge 12a, a second edge 12b, a first end 14a, and a second end 14b. The first fin 20 extends longitudinally along said first edge 12a of the body 10, and the second fin 20' extends longitudinally along said second edge 12b of the body 10. Said fins 20, 20' similarly have each an outside edge 22, 22', a first end 24a, 24a', and a second end 24b, 246'. According to the invention, said fins 20, 20' are tapered, such that each said fin 20, 20' is wider at or near its first end 24a, 24a' than at or near its second end 24b, 24b' and, correspondingly, the outside edge 22, 22' of each said fin are sloped. In certain other embodiments not forming part of the invention, the fins may not be sloped or tapered. The degree of tapering and length of each fin 20, 20' may help to, among other things, control the flow and distribution of gas in an application or environment (such as a boiler) and, more specifically, in the banks of the tubes in such application or environment, and may be dictated by the desired redistribution of gas across such tubes. In some embodiments, the spacing of the tubes in the boiler may affect the tapering of the fins 20, 20', and the farther apart said tubes are, the wider the fins 20, 20' may be. In certain embodiments, the respective first ends 24a, 24a' of the fins 20, 20' may touch, or nearly touch, the respective first ends 24a, 24a' of the fins 20, 20' of the tube shields on the adjacent tubes. Also in certain embodiments, the respective first ends 24a, 24a' or second ends 24b, 24b' of the fins 20, 20' may be interlocked or welded to the respective first ends 24a, 24a' or, as the case may be, second ends 24b, 24b' of the fins 20, 20' of the tube shields on the adjacent tubes. Each fin 20, 20' may be comprised of the same types of materials as the body 10, including, for example, steel (including carbon steel). It should also be appreciated the body 10 and the fins 20, 20' may be formed from a single piece of material (such as a single piece of metal).

The aerodynamic tube shield 2 of the present invention may be secured to a tube 4 by various means. In certain embodiments, one or more fasteners may be used to secure said tube shield 2 to said tube 4. Said fasteners may include, without limitation, a number of different types of fasteners, including snaps, clips, bolts, and straps. During installation of an aerodynamic tube shield 2, a thin layer of a high thermal conductivity material, such as mortar, may be deposited under each tube shield 2 or on the surface of the applicable tube 4 on which the tube shield 2 is to be placed. Said tube shield 2 may be installed on any side of the applicable tube 4, including the top or bottom surface, as may be dictated by or desired under the circumstances. In certain embodiments, a tube shield 2 may be installed on the top surface of the applicable tube 4 and a second tube shield 2 may be installed on the bottom of such tube 4 (or vice versa).

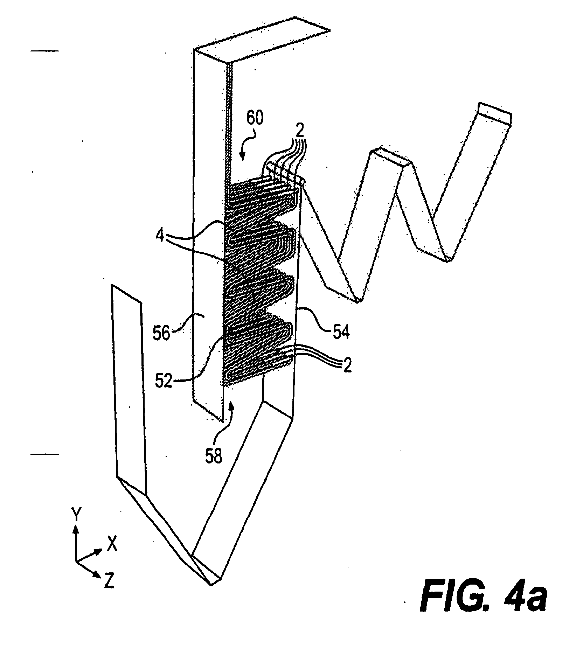

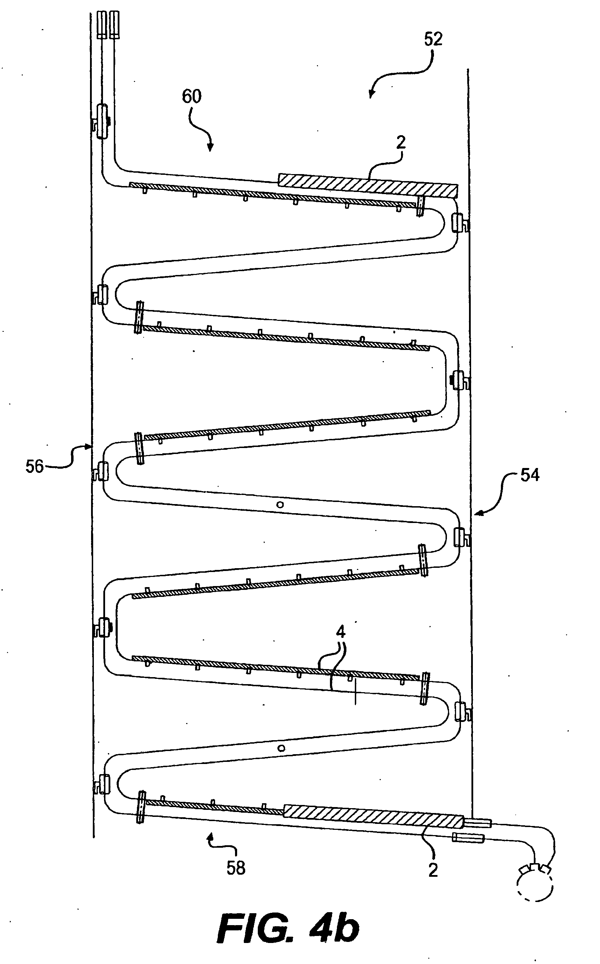

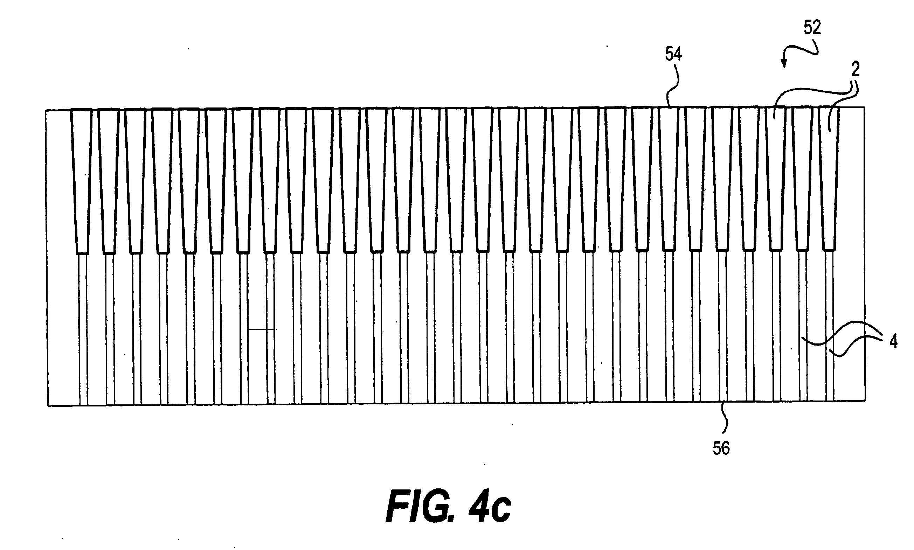

Fig. 4a depicts a view of a section of a side elevation of a third pass in an EfW boiler in which aerodynamic tube shields 2 of the present invention may be installed. In this particular boiler, hot gas may enter from the bottom, lefthand side of the evaporator 52 to heat the tubes 4 therein. To maximize heat transfer efficiency in this boiler (as well as in other applications), it is important that such gas be distributed evenly across the length of such tubes 4. In many cases, however, such gas may be predisposed towards certain areas in the application. By way of example, in Fig. 4a, as a result of making the turn into the evaporator 52 in the third pass, the gas may be predisposed toward the rear wall 54 of such evaporator 52. As a result of such tendency, the portions of the tubes 4 closest to the rear wall 54 tend to receive too much gas (with such gas having higher temperatures and velocities), which results in the degradation of such portions of such tubes 4, whereas the portions of the tubes 4 near the front wall 56 tend to receive less gas and thus have less heat transfer. Aerodynamic tube shields of the present invention can be installed, among other places, along the rear wall 54 at the inlet 58 and outlet 60 of the evaporator 52 to help maximize heat transfer efficiency, alleviate the effects of unequal gas flow distribution, and protect the tubes from the hostile boiler environment. Fig. 4b also depicts a side elevation of such evaporator 52 in such third pass. As can also be seen in Fig. 4b, the tubes 4 may extend in a snakelike manner from the top to the bottom of the evaporator 52 and aerodynamic tube shields 2 can be installed along the rear wall 54 at the inlet 58 and outlet 60 of the evaporator 52. Fig. 4c depicts a plan view zoomed in on such evaporator 52 in such third pass of such boiler. Aerodynamic tube shields 2 of the present invention can again be seen mounted on each tube 4 along or near the rear wall 54.

Computational fluid dynamics (CFD) simulation results for such an EfW boiler evaporator will next be described. These simulation results show pressure, temperature, and velocity contour plots for a cross-section of such evaporator with and without aerodynamic tube shields of the present invention.

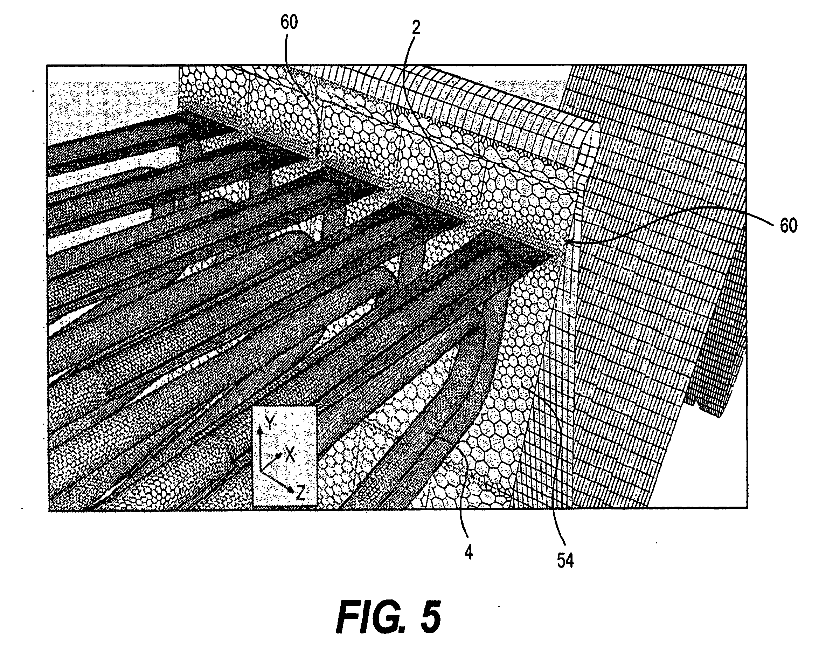

At the outset, it is noted that Fig. 5 shows mesh details for the CFD modeling. In particular, Fig. 5 shows the mesh details for the CFD model of an embodiment of aerodynamic tube shields of the present invention installed along the rear wall at the outlet of the evaporator. This figure may give one skilled in the art a better understanding of the quality, concept, and resolution of the mesh used in the CFD modeling.

With reference again to Fig. 4c, it is further noted that the CFD simulations used the following dimensions. As discussed herein, however, dimensions (including length, width, and thickness) may vary depending on the embodiment of the aerodynamic tube shield and the application in which it is used. In this particular embodiment, the rear wall 54 and front wall 56 of the evaporator 52 were both 30'-8" (approx. 934,72 cm.) wide. There were a total of 29 tubes 4 in such evaporator 52, and each tube 4 was 10' (∼304.8 cm) long and 3" (∼7.62 cm.) wide and spaced approximately 1' (2.54 cm) from the tubes 4 adjacent to it. As mentioned above, only a cross-section of the evaporator 52 (specifically, five of the 29 total tubes 4) were used in these CFD simulations. Two separate embodiments of the aerodynamic tube shield 2 were simulated. In the first embodiment simulated, the aerodynamic tube shield 2 was 4'-11" (approx. 159,86 cm.) long, 4.86" (∼12.34 cm.) wide at one end, and 9" (∼22.86 cm.) wide at the second, wider end (which wider end may be nearer to or placed positioned against the rear wall 54). Said tube shield 2 was also comprised of steel 0.125" (∼0.3175 cm) thick. (Such first embodiment, "Test Embodiment One.") In the second embodiment tested, the aerodynamic tube shield 2 was again 4.86" (∼ 12.34 cm.) wide at one end and 9" (∼22.86 cm.) wide at the second, wider end, but in this embodiment was only 3'6" (∼106.68 cm.) long. Said tube shield 2 was again comprised of steel 0.125" (∼0.3175 cm.) thick. (Such second embodiment, "Test Embodiment Two.")

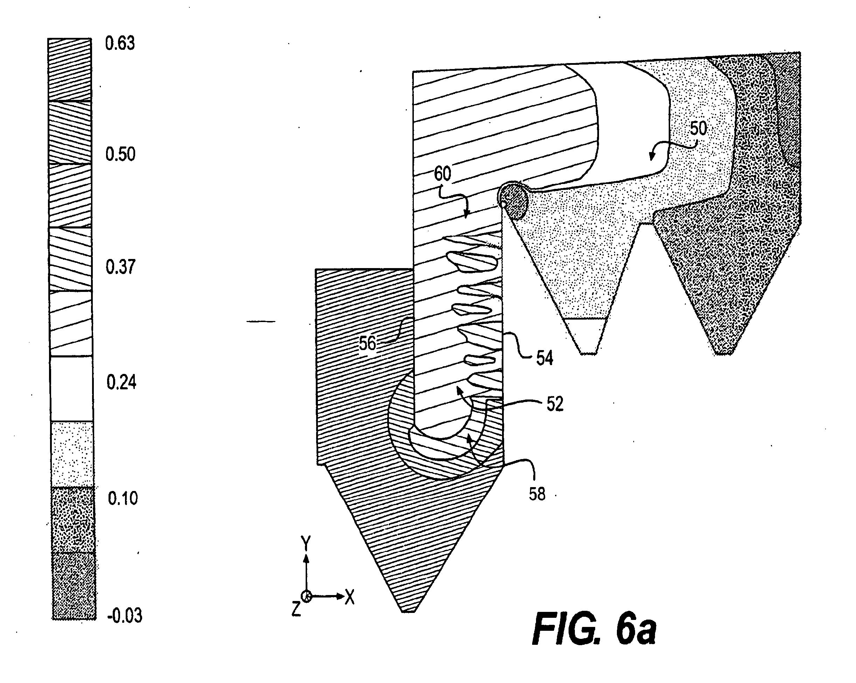

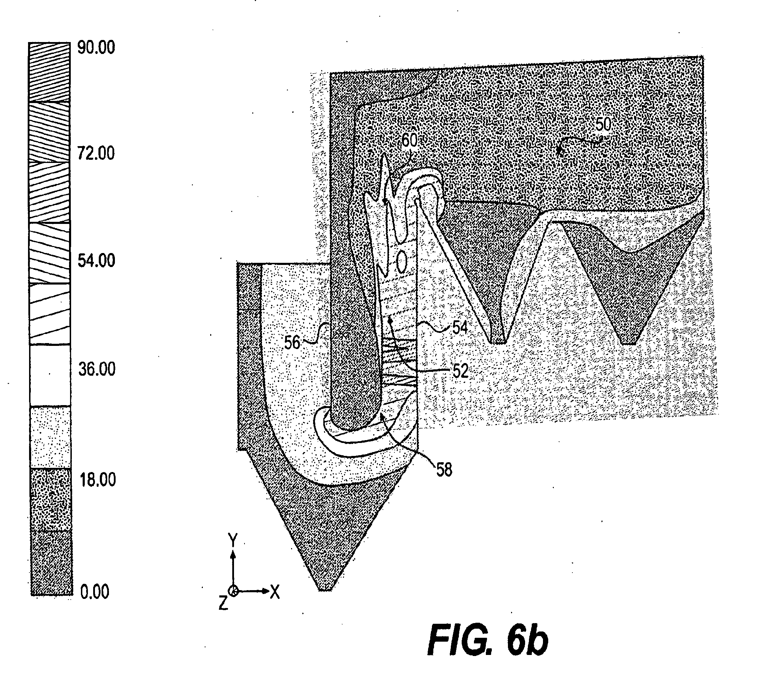

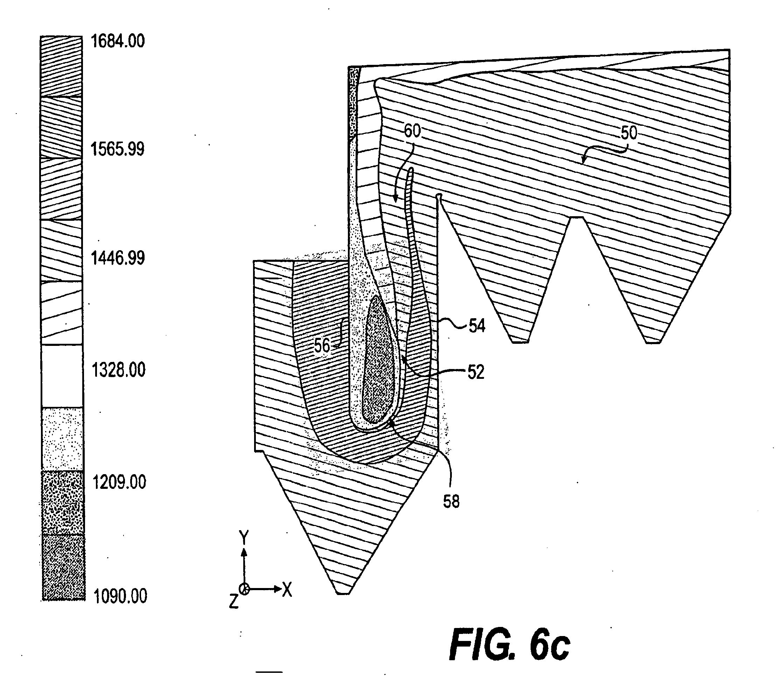

Figs. 6a through 6c are the CFD simulation results of the evaporator 52 without the use of an aerodynamic tube shield 2 of the present invention. Fig. 6a shows the static pressure contours (inches-water, whereby 1 inch ≅ 2.54 cm.) in the third pass and, in particular, the evaporator 52. As can be seen from the results, given the tendency of gas toward the rear wall 54 in the evaporator 52, the pressure at the inlet 58 near the rear wall 54 is higher than the pressure near the front wall 56. Fig. 6b shows the velocity magnitude contours (feet/second, whereby 1 foot = 30.48 cm). As can be seen from the results, the gas tends to have a noticeably higher velocity near the rear wall 54 throughout the evaporator 52. Finally, Fig. 6c shows the static temperature contours (F). As can be seen from the results, there is an uneven heat distribution throughout the evaporator 52, with the areas around the rear wall 54 being much hotter than the areas around the front wall 56.

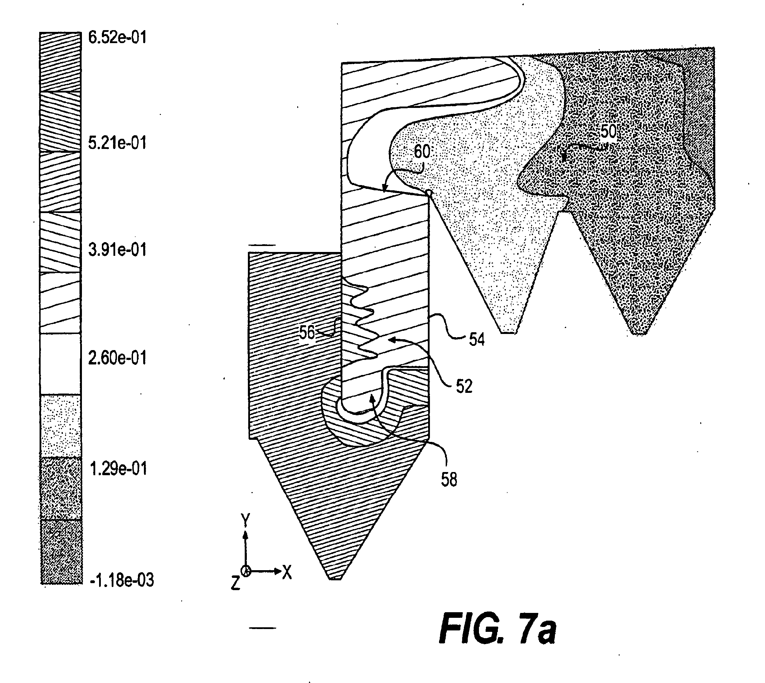

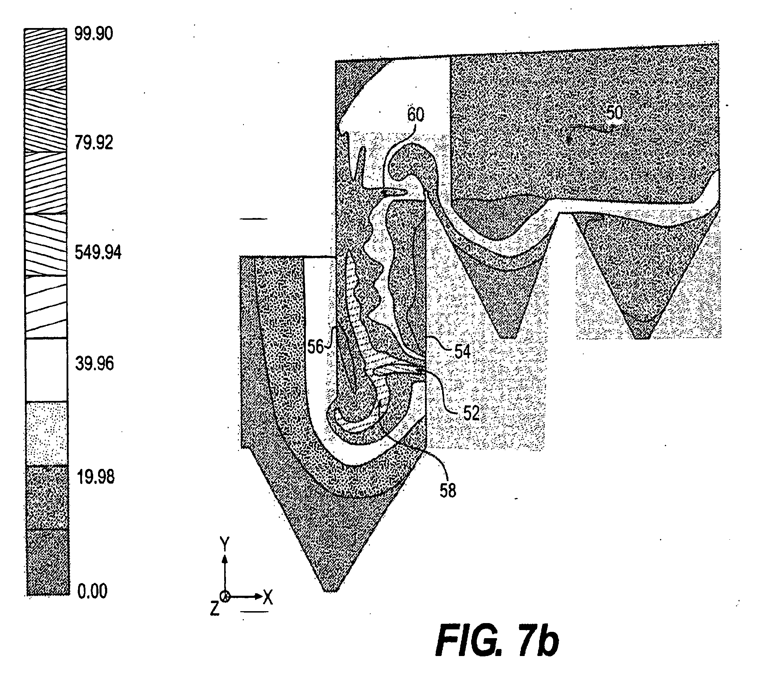

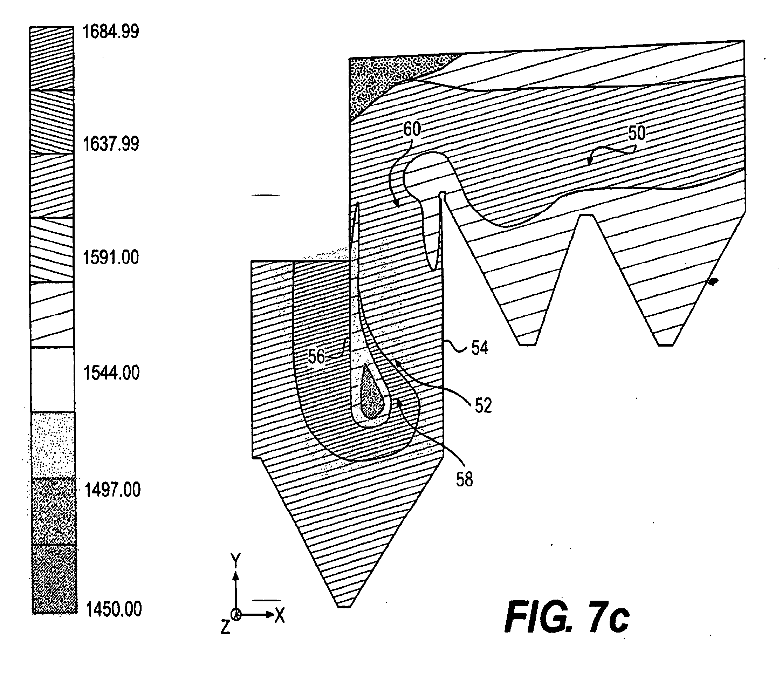

Figs. 7a through 7c are CFD simulation results of the evaporator 52 where Test Embodiment One of the aerodynamic tube shields 2 is installed on the tubes 4 at the inlet 58 and outlet 60 of the evaporator 52. Fig. 7a shows the static pressure contours (inches-water) in the third pass and, in particular, the evaporator 52. As can be seen from the results, when aerodynamic tube shields 2 of the present invention are used, the pressure along the rear wall 54 is more equalized throughout the evaporator 52. Fig. 7b shows the velocity magnitude contours (feet/second, whereby 1 foot = 30.48 cm). As can be seen from the results, the gas velocity increases near the front wall 56 of the evaporator, as a result of the placement of the aerodynamic tube shields along the rear wall 54 at the inlet 58. The gas velocity is more even throughout the entirety of the evaporator, however, rather than concentrated near the rear wall 54. Finally, Fig. 7c shows the static temperature contours (F). As can be seen from the results, there is a temperature increase near the front wall at the inlet 58, again given the placement of the aerodynamic tube shields along the rear wall 54. But heat distribution is much more even throughout the evaporator 52, instead of the gas and the heat therefrom being concentrated near the rear wall 54.

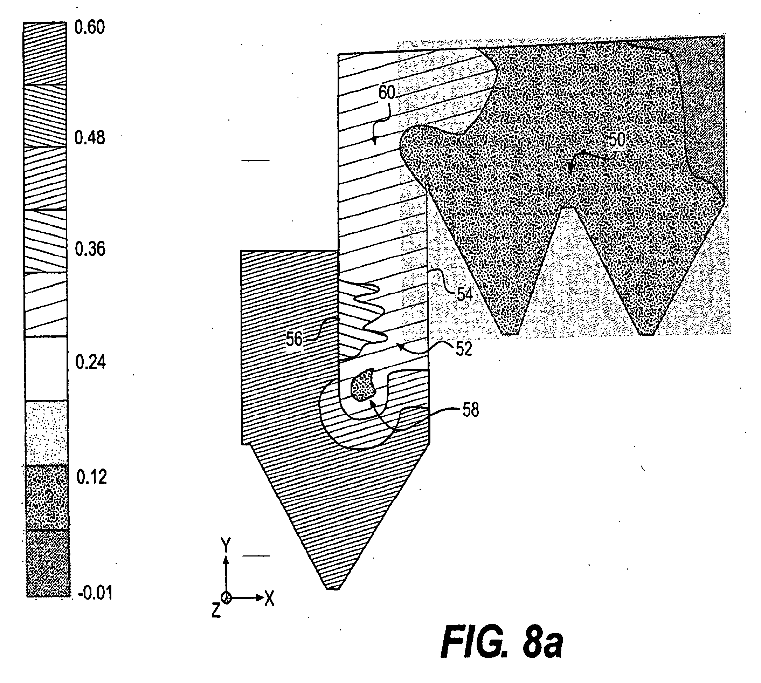

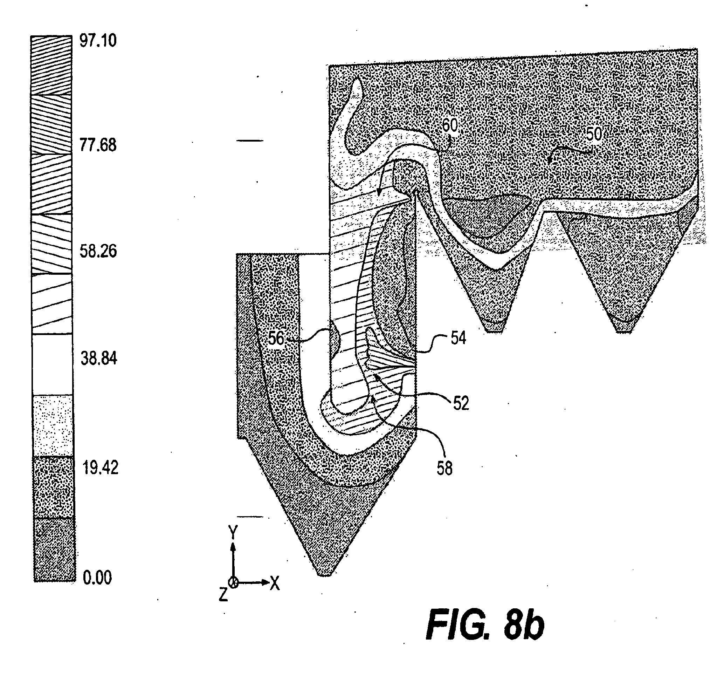

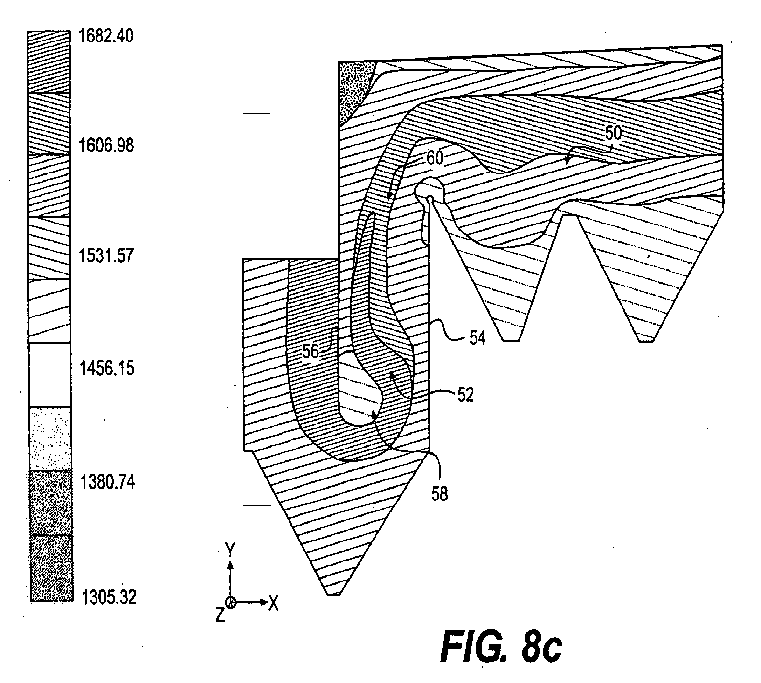

Figs. 8a through 8c are CFD simulation results of the evaporator 52 where Test Embodiment Two of the aerodynamic tube shields 2 is installed on the tubes 4 at the inlet 58 and outlet 60 of the evaporator 52. Fig. 8a shows the static pressure contours (inches-water) in the third pass and, in particular, the evaporator 52. As can be seen from the results, when aerodynamic tube shields 2 of the present invention are used, the pressure along the rear wall 54 is again more equalized throughout the evaporator 52. Fig. 8b shows the velocity magnitude contours (feet/second, whereby 1 foot = 30.48 cm.). As can be seen from the results, the gas velocity again increases near the front wall 56, but is generally more even throughout the entirety of the evaporator 52 than without the use of aerodynamic tube shields (although less so than when compared with Test Embodiment One). It is also noted that, when compared with Test Embodiment One, the gas velocity is higher in the middle near the inlet 58, since Test Embodiment Two is shorter in length than Test Embodiment One. Finally, Fig. 8c shows the static temperature contours (F). As can be seen from the results, heat distribution is again much more even throughout the evaporator 52, instead of the gas and the heat therefrom being concentrated near the rear wall 54. As can further be seen when comparing Figs. 6a through 6c with Figs. 7a through 7c and Figs. 8a through 8c, the improvement of gas flow distribution, velocities, and temperatures in the evaporator 52 of the third pass through the use of aerodynamic tube shields correspondingly improves gas flow distribution, velocities, and temperatures in the superheater 50 in the fourth pass of the boiler.

The following results were also determined from the foregoing CFD simulations using CFD Ansys Fluent software:

| **Case** | **Pressure Drop** (inches-water) | **Gas Velocity Uniformity Improvement** (compared to without Aero-Shields) | **Gas Temperature Uniformity Improvement** (compared to without Aero-Shields) | **Heat Transfer Enhancement** (compared to without Aero-Shields) |
|---|---|---|---|---|
| Without Aero-Shields | 0.26" (approx. 0.7 cm) | N/A | N/A | N/A |
| Test Embodiment One | 0.42" (approx. 1.1 cm) | 16% | 29% | 15% |
| Test Embodiment Two | 0.33" (approx. 0.8 cm) | 11% | 21% | 12% |

As can be seen from the foregoing, there is a pressure drop in the evaporator 52 between the inlet 58 and the outlet 60 when either Test Embodiment One or Test Embodiment Two is used. The pressure drop with Test Embodiment Two is slightly smaller because such embodiment is shorter than Test Embodiment One. As can also be seen from the foregoing, in this particular boiler, Test Embodiment One enhances gas velocity and uniformity more than Test Embodiment Two. (These are measures of the uniformity of gas velocity and temperature throughout the evaporator.) As can further be seen from the foregoing, in this particular boiler, Test Embodiment One enhances heat transfer slightly more than Test Embodiment Two. (This is a measure of the energy being absorbed from the gas into the evaporator tubes.) As noted elsewhere, however, the dimensions (including length, width, and thickness) and placement of the aerodynamic tube shield that will work most effectively and efficiently for a given application will depend on such application. For example, in certain applications, gas velocity and temperature uniformity and heat transfer may further be improved by including aerodynamic tube shields on a row of tubes in the middle of the evaporator, as well as at the inlet and outlet. It is further noted that the foregoing CFD simulation results relate to only a cross-section of the evaporator (i.e., five of the 29 total tubes). Thus, if the additional 24 tubes in this particular simulated evaporator were taken into the account, the gas velocity and temperature uniformity and heat enhancements could be even higher.

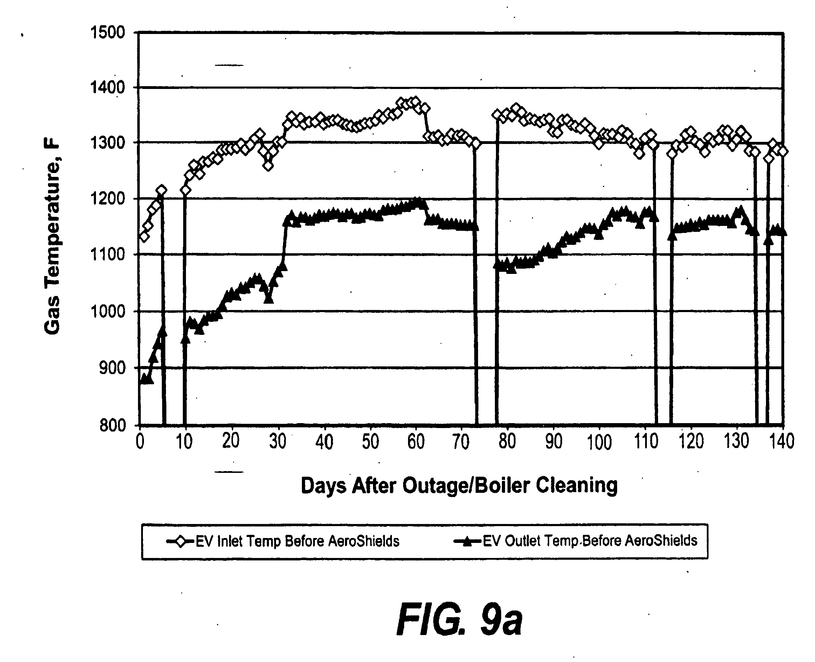

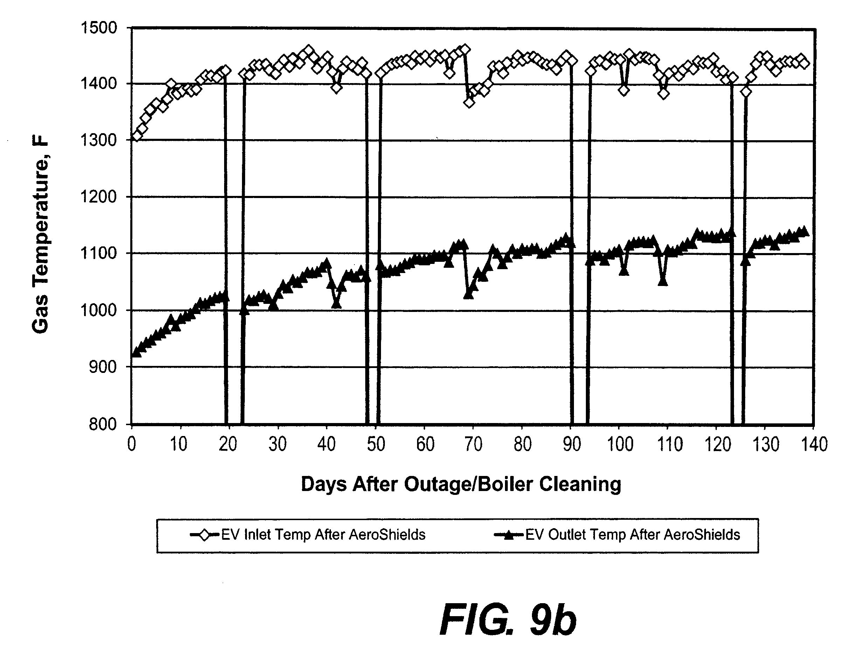

Additional data was collected from the field regarding heat recovery in an evaporator in an EfW boiler before and after the use of aerodynamic tube shields with the dimensions of Test Embodiment One. Figs. 9a through 9b show the results of this data collection after similar 140-day periods. More specifically, Fig. 9a shows the temperature, where no aerodynamic tube shields are used, over a 140-day period at the inlet and outlet of an evaporator in a boiler. Fig. 9b shows the temperature, where aerodynamic tube shields with the dimensions of Test Embodiment One are used, over a similar 140-day period at the inlet and outlet of said evaporator at the same boiler load. As can be seen when comparing Figs. 9a and 9b, the gas temperature drop from the inlet to the outlet was larger and more consistent when an aerodynamic tube shield of the present invention was used. Further, the temperature at the evaporator outlet was generally lower when such tube shields were used. Thus, when aerodynamic tube shields of the present invention were used, the evaporator tended to stay cleaner for a longer time period and, correspondingly, the loss in heat recovery over a given period was lower and boiler down time was reduced. (Over time, boilers typically get fouled or dirty and heat recovery decreases.) Lower temperatures at the outlet of the evaporator may be important in particular because, in certain applications, the next pass (e.g., the fourth pass) may contain more vulnerable or sensitive components (e.g., superheaters). Thus, lower temperatures may help minimize corrosion on these components in such next pass and could, correspondingly, further reduce boiler down time. As may be appreciated by one skilled in the art, calculations based on the foregoing data indicated a 30% increase in heat recovery in the evaporator when aerodynamic tube shields were used over a 140-day period.

Although the foregoing application of the present invention relates to an evaporator in an EfW boiler, it should be appreciated that the aerodynamic tube shield of the present invention may be used in a wide range of applications, including a wide range of boilers, gasifiers, and heat exchangers and components therein. Indeed, the tube shields of the present invention may be used in any application where there is unequal gas flow distribution to help alleviate the effects of such unequal distribution and maximize heat transfer efficiency, while simultaneously providing a shield to protect the tube from the environment of the application.

Further, although the foregoing application of the present invention discussed the installation of aerodynamic tube shields at the evaporator inlet and outlet, it should be appreciated the aerodynamic tube shields of the present invention may be installed in various locations in EfW boilers (as well as boilers of various other types and designs), depending on the tendencies of the relevant gas passing through the applicable boiler, as may be determined by engineering analysis (such as CFD modeling).

## Claims

1. A tube shield for protecting a tube and simultaneously directing the flow of gas, said tube shield comprising:
a) a body configured for protecting a tube (4), said body having a first edge (12 a) and a second edge (12 b);
b) first and second fins (20, 20') configured for directing the flow of a gas, wherein said first fin (20) extends longitudinally along said first edge (12 a) of said body and said second fin (20') extends longitudinally along said second edge (12 b) of said body and wherein further said first and second fins (20, 20') are tapered longitudinally along said body such that each said fin (20, 20') is wider at a first end of the body (24 a, 24 a') than at a second end of the body (24 b, 24b').

2. The tube shield of Claim 1, wherein said tube shield (2) is configured for insertion onto a tube (4) in a boiler, gasifier, or heat exchanger.

3. The tube shield of Claim 1 or 2, wherein said body is semi-cylindrical and wherein said body has a radius preferably substantially the same as an outer radius of said tube (4).

4. The tube shield according to one of the preceding Claims, wherein said body and first and second fins (20, 20') are formed from a single piece of material.

5. The tube shield according to one of the preceding Claims , wherein said body and first and second fins (20, 20') are comprised of steel.

6. The tube shield according to one of the preceding Claims, further comprising one or more fasteners or fastening means that can be used to secure said tube shield (2) to a tube (4).

7. The tube shield of Claim 6, wherein said fasteners are snaps, clips, bolts, or straps.

8. A system for improving unequal gas flow distribution and protecting tubes, said system comprising:
a) one or more rows of tubes (4);
b) a plurality of aerodynamic tube shields (2), wherein each said aerody-namic tube shield (2) is comprised of a body and one or more fins (20, 20') tapered longitudinally along said body, such that each said fin (20, 20') is wider at a first end of the body (24 a, 24 a') than at a second end of the body (24 b, 24b'), for directing the flow of gas and wherein said plurality of aerodynamic tube shields (2) are installed on one or more tubes (4) in a first row of tubes and one or more tubes in a second row of tubes.

9. The system of Claim 8, wherein said one or more rows of tubes (4) are in a boiler, gasifier, or heat exchanger.

10. The system of Claim 9, wherein said first row of tubes is at an inlet in a first area of said boiler, gasifier, or heat exchanger and said second row of tubes is at an outlet in said first area of said boiler, gasifier, or heat exchanger.

11. The system of Claim 9 or 10, wherein said plurality of aerodynamic tube shields are installed on said first row of tubes and said second row of tubes along a rear wall of said boiler, gasifier, or heat exchanger.

12. A method for redistributing gas flow across and protecting tubes in a system having unequal gas flow distribution using aerodynamic tube shields (2), wherein said system has multiple rows of tubes (4), said method comprising the steps of:
a) obtaining a plurality of aerodynamic tube shields (2) having tapered fins (20, 20') configured for redistributing the flow of a gas and a body configured for protecting a tube (4), wherein said tapered fins (20, 20') are tapered longitudinally along said body such that each said tapered fin (20, 20') is wider at a first end of the body (24 a, 24 a') than at a second end of the body (24 b, 24b');
b) installing an aerodynamic tube shield (2) on one or more tubes (4) in a first row of tubes in said system; and
c) installing an aerodynamic tube shield (2) on one or more tubes (4) in a second row of tubes in said system.

13. The method of Claim 12, wherein said system is a boiler, gasifier, or heat exchanger.

14. The method of Claim 12 or 13 wherein said first row of tubes is at an inlet in an area in said system.

15. The method of one of Claims 12 - 14, wherein said second row of tubes is at an outlet in an area in said system.

16. The method of one of Claims 12 - 15, further comprising the step of, before installing each aerodynamic tube shield (2), depositing a thin layer of a high thermal conductivity material under said aerodynamic tube shield or on a surface of the tube on which the aerodynamic tube shield (2) is to be installed.

17. The method of Claim 16, wherein said high thermal conductivity material is mortar.

## Patentansprüche

1. Röhrenabschirmung zum Schutz einer Röhre und zum gleichzeitigen Steuern des Gasstroms, wobei die Röhrenabschirmung aufweist:
a) einen Körper, der zum Schutz einer Röhre (4) konfiguriert ist, wobei der Körper eine erste Kante (12a) und eine zweite Kante (12b) hat;
b) erste und zweite Rippen (20, 20'), die konfiguriert sind, um den Strom eines Gases zu steuern, wobei die erste Rippe (20) sich in Längsrichtung entlang der ersten Kante (12a) des Körpers erstreckt, und die zweite Rippe (20') sich in Längsrichtung entlang der zweiten Kante (12b) des Körpers erstreckt, und wobei weiter die ersten und zweiten Rippen (20, 20') in Längsrichtung entlang des Körpers derart abgeschrägt sind, dass jede Rippe (20, 20') an einem ersten Ende des Körpers (24a, 24a') breiter ist als an einem zweiten Ende des Körpers (24b, 24b').

2. Röhrenabschirmung nach Anspruch 1, wobei die Röhrenabschirmung (2) zum Einfügen auf eine Röhre (4) in einen Boiler, Gasgenerator oder Wärmetauscher konfiguriert ist.

3. Röhrenabschirmung nach Anspruch 1 oder 2, wobei der Körper halbzylindrisch ist, und wobei der Körper einen Radius hat, der vorzugsweise im Wesentlichen gleich einem Außenradius der Röhre (4) ist.

4. Röhrenabschirmung nach einem der vorhergehenden Ansprüche, wobei der Körper und die ersten und zweiten Rippen (20, 20') aus einem einzigen Materialstück geformt sind.

5. Röhrenabschirmung nach einem der vorhergehenden Ansprüche, wobei der Körper und die ersten und zweiten Rippen (20, 20') aus Stahl bestehen.

6. Röhrenabschirmung nach einem der vorhergehenden Ansprüche, die weiter eine oder mehrere Befestigungen oder Befestigungseinrichtungen aufweist, die verwendet werden können, um die Röhrenabschirmung (2) an einer Röhre (4) zu befestigen.

7. Röhrenabschirmung nach Anspruch 6, wobei die Befestigungen Schnappbefestigungen, Klammern, Bolzen oder Gurte sind.

8. System zur Verbesserung einer ungleichmäßigen Gasstromverteilung und zum Schutz von Röhren, wobei das System aufweist:
a) eine oder mehrere Reihen von Röhren (4);
b) eine Vielzahl von aerodynamischen Röhrenabschirmungen (2), wobei jede aerodynamische Röhrenabschirmung (2) aus einem Körper und einer oder mehreren Rippen (20, 20') besteht, die in Längsrichtung des Körpers derart abgeschrägt sind, dass jede Rippe (20, 20') an einem ersten Ende des Körpers (24a, 24a') breiter ist als an einem zweiten Ende des Körpers (24b, 24b'), um den Gasstrom zu steuern, und wobei die Vielzahl von aerodynamischen Röhrenabschirmungen (2) auf einer oder mehreren Röhren (4) in einer ersten Reihe von Röhren und auf einer oder mehreren Röhren in einer zweiten Reihe von Röhren eingebaut sind.

9. System nach Anspruch 8, wobei die eine oder mehreren Reihen von Röhren (4) sich in einem Boiler, Gasgenerator oder Wärmetauscher befinden.

10. System nach Anspruch 9, wobei die erste Reihe von Röhren sich an einem Einlass in einem ersten Bereich des Boilers, Gasgenerators oder Wärmetauschers und die zweite Reihe von Röhren sich an einem Auslass in dem ersten Bereich des Boilers, Gasgenerators oder Wärmetauschers befindet.

11. System nach Anspruch 9 oder 10, wobei die Vielzahl von aerodynamischen Röhrenabschirmungen auf der ersten Reihe von Röhren und der zweiten Reihe von Röhren entlang einer Rückwand des Boilers, Gasgenerators oder Wärmetauschers eingebaut sind.

12. Verfahren zur Neuverteilung eines Gasstroms durch Röhren und zum Schutz von Röhren in einem System mit einer ungleichmäßigen Gasstromverteilung unter Verwendung von aerodynamischen Röhrenabschirmungen (2), wobei das System viele Reihen von Röhren (4) hat, wobei das Verfahren die folgenden Schritte aufweist:
a) Erhalt einer Vielzahl von aerodynamischen Röhrenabschirmungen (2) mit abgeschrägten Rippen (20, 20'), die für die Neuverteilung des Stroms eines Gases konfiguriert sind, und mit einem Körper, der für den Schutz einer Röhre (4) konfiguriert ist, wobei die abgeschrägten Rippen (20, 20') in Längsrichtung entlang des Körpers so abgeschrägt sind, dass jede abgeschrägte Rippe (20, 20') an einem ersten Ende des Körpers (24a, 24a') breiter ist als an einem zweiten Ende des Körpers (24b, 24b');
b) Einbau einer aerodynamischen Röhrenabschirmung (2) auf einer oder mehreren Röhren (4) in einer ersten Reihe von Röhren in dem System; und
c) Einbau einer aerodynamischen Röhrenabschirmung (2) auf einer oder mehreren Röhren (4) in einer zweiten Reihe von Röhren in dem System.

13. Verfahren nach Anspruch 12, wobei das System ein Boiler, Gasgenerator oder Wärmetauscher ist.

14. Verfahren nach Anspruch 12 oder 13, wobei die erste Reihe von Röhren sich an einem Einlass in einem Bereich in dem System befindet.

15. Verfahren nach einem der Ansprüche 12 - 14, wobei die zweite Reihe von Röhren sich an einem Auslass in einem Bereich in dem System befindet.

16. Verfahren nach einem der Ansprüche 12 - 15, das weiter vor dem Einbau jeder aerodynamischen Röhrenabschirmung (2) den Schritt des Aufbringens einer dünnen Schicht eines Materials mit hoher Wärmeleitfähigkeit unter der aerodynamischen Röhrenabschirmung oder auf einer Fläche der Röhre enthält, auf die die aerodynamische Röhrenabschirmung (2) eingebaut werden soll.

17. Verfahren nach Anspruch 16, wobei das Material mit hoher Wärmeleitfähigkeit Mörtel ist.

## Revendications

1. Protecteur de tube pour protéger un tube et simultanément diriger le flux de gaz, ledit protecteur de tube comprenant:
a) un corps configuré pour protéger un tube (4), ledit corps ayant une première bordure (12a) et une seconde bordure (12b);
b) une première et une seconde ailette (20, 20') configurées pour diriger le flux d'un gaz, dans lesquelles ladite première ailette (20) s'étend longitudinalement le long de ladite première bordure (12a) dudit corps et ladite seconde ailette (20') s'étend longitudinalement le long de ladite seconde bordure (12b) dudit corps, et dans lesquelles ladite première et ladite seconde ailette (20, 20') sont en outre effilées en sens longitudinal le long dudit corps de telle façon que chaque ailette (20, 20') est plus large à une première extrémité du corps (24a, 24a') qu'à une seconde extrémité du corps (24b, 24b').

2. Protecteur de tube selon la revendication 1, dans lequel ledit protecteur de tube (2) est configuré pour être inséré par-dessus un tube (4) dans une chaudière, un gazéificateur, ou un échangeur de chaleur.

3. Protecteur de tube selon la revendication 1 ou 2, dans lequel ledit corps est semi-cylindrique et dans lequel ledit corps a un rayon qui est de préférence sensiblement le même qu'un rayon extérieur dudit tube (4).

4. Protecteur de tube selon l'une des revendications précédentes, dans lequel ledit corps et ladite première et ladite seconde ailette (20, 20') sont formés d'une unique pièce de matériau.

5. Protecteur de tube selon l'une des revendications précédentes, dans lequel ledit corps et ladite première et ladite seconde ailette (20, 20') sont constitués en acier.

6. Protecteur de tube selon l'une des revendications précédentes, comprenant en outre un ou plusieurs éléments de fixation ou moyens de fixations qui peuvent être utilisés pour attacher ledit protecteur de tube (2) sur un tube (4).

7. Protecteur de tube selon la revendication 6, dans lequel lesdits éléments de fixation sont des éléments à encliquetage, des pinces, des boulons ou des sangles.

8. Système pour améliorer une distribution inégale d'un flux de gaz et pour protéger des tubes, ledit système comprenant:
a) une ou plusieurs rangées de tube (4);
b) une pluralité de protecteurs de tube aérodynamiques (2), dans lesquels chacun desdits protecteurs de tube aérodynamiques (2) comprend un corps et une ou plusieurs ailettes (20, 20') effilées en sens longitudinal le long dudit corps, de telle façon que chaque ailette (20, 20') est plus large à une première extrémité du corps (24a, 24a') qu'à une seconde extrémité du corps (24b, 24b') pour diriger le flux de gaz, et dans lequel ladite pluralité de protecteurs de tube aérodynamiques (2) sont installés sur un ou plusieurs tubes (4) dans une première rangée de tubes et sur un ou plusieurs tubes dans une seconde rangée de tubes.

9. Système selon la revendication 8, dans lequel lesdites une ou plusieurs rangées de tube (4) sont dans une chaudière, un gazéificateur, ou un échangeur de chaleur.

10. Système selon la revendication 9, dans lequel ladite première rangée de tubes est à une entrée dans une première zone de ladite chaudière, dudit gazéificateur ou dudit échangeur de chaleur, et ladite seconde rangée de tubes est à une sortie dans ladite première zone de ladite chaudière, dudit gazéificateur ou dudit échangeur de chaleur.

11. Système selon la revendication 9 10, dans lequel ladite pluralité de protecteurs de tube aérodynamiques sont installées sur ladite première rangée de tubes et ladite seconde rangée de tubes le long d'une paroi postérieure de ladite chaudière, dudit gazéificateur ou dudit échangeur de chaleur.

12. Procédé pour redistribuer un flux de gaz et pour protéger des tubes dans un système ayant une distribution inégale du flux de gaz en utilisant des protecteurs de tube aérodynamiques (2), dans lequel ledit système comprend une multiplicité de rangées de tubes (4), ledit procédé comprenant les étapes consistant à:
a) obtenir une pluralité de protecteurs de tube aérodynamiques (2) ayant des ailettes effilées (20, 20') configurés pour redistribuer le flux d'un gaz et un corps configuré pour protéger un tube (4), dans lequel lesdites ailettes effilées (20, 20') sont effilées en sens longitudinal le long dudit corps de telle façon que chaque ailette effilée (20, 20') est plus large à une première extrémité du corps (24a, 24a') qu'à une seconde extrémité du corps (24b, 24b');
b) installer un protecteur de tube aérodynamique (2) sur un ou plusieurs tubes (4) dans une première rangée de tubes dans ledit système; et
c) installer un protecteur de tube aérodynamique (2) sur un ou plusieurs tubes (4) dans une seconde rangée de tubes dans ledit système.

13. Procédé selon la revendication 12, dans lequel ledit système est une chaudière, un gazéificateur, ou un échangeur de chaleur.

14. Procédé selon la revendication 12 ou 13, dans lequel ladite première rangée de tubes est à une entrée dans une zone dans ledit système.

15. Procédé selon l'une des revendications 12 à 14, dans lequel ladite seconde rangée de tubes est à une sortie dans une zone dans ledit système.

16. Procédé selon l'une des revendications 12 à 15, comprenant en outre l'étape consistant à, avant l'installation de chaque protecteur de tube aérodynamique (2), déposer une mince couche d'un matériau à haute conductivité thermique au-dessous dudit protecteur de tube aérodynamique ou sur une surface de tube sur lequel le protecteur de tube aérodynamique (2) doit être installé.

17. Procédé selon la revendication 16, dans lequel ledit matériau à haute conductivité thermique est un mortier.
